# EUROPÄISCHE PATENTSCHRIFT

(11) **EP 3 651 968 B1**
(45) Veröffentlichungstag und Bekanntmachung des Hinweises auf die Patenterteilung: **31.08.2022**
(21) Anmeldenummer: 18736910.3
(22) Anmeldetag: 06.07.2018
(51) Int. Cl.: B29B 7/74, B29B 7/72, B29B 7/80, B29B 7/84, B29C 48/25, B29C 48/255, B29C 48/385, B29C 48/76, B29B 7/42, B29B 7/48

(54) **EXTRUDERSYSTEM MIT DRUCKREGELEINRICHTUNG**
EXTRUDER SYSTEM WITH PRESSURE REGULATING DEVICE
SYSTÈME D'EXTRUSION MUNI D'UN DISPOSITIF DE RÉGULATION DE LA PRESSION

(30) Priorität: 10.07.2017 EP 17180511
(43) Veröffentlichungstag der Anmeldung: 20.05.2020
(73) Patentinhaber: ARLANXEO Deutschland GmbH, 41540 Dormagen (DE)
(72) Erfinder: KIRCHHOFF, Jörg, 51061 Köln (DE); KÖNIG, Thomas, 51375 Leverkusen (DE)
(74) Vertreter: Kutzenberger Wolff & Partner
(86) Internationale Anmeldenummer: PCT/EP2018/068379
(87) Internationale Veröffentlichungsnummer: WO 2019/011807

(56) Entgegenhaltungen:
- EP-A1- 0 683 028
- EP-A2- 0 371 230
- WO-A2-2013/045623
- DE-A1- 3 703 758
- DE-A1-102013 008 202
- US-A1- 2009 065 965
- US-A1- 2015 203 600

## Beschreibung

Die Erfindung betrifft ein Extrudersystem.

Extruder können grundsätzlich in zwei Arten unterschieden werden, die sich in den Prozessprinzipien unterscheiden. Verarbeitungsextruder dienen hauptsächlich der Formgebung (in der Regel Einwellenextruder), während Aufbereitungsextruder der chemischen und/oder physikalischen Modifizierung (Reagieren, Mischen, Entgasen, etc.) von Stoffen dienen (gleichlaufender dichtkämmender Doppelwellenextruder, Busskneter etc.).

Eine Form von Aufbereitungsextrudern sind sogenannte Entgasungsextruder, die Anwendung bei insbesondere der Entgasung von Polymeren und speziell von Elastomeren Anwendung finden.

Der Entgasungsprozess ist dabei regelmäßig in mehrere Stufen unterteilt. Dabei können in einem ersten Extruder die flüchtigen Bestandteile, wie z.B. Lösungsmittel, Restmonomere oder Wasser, bis zu einem Restflüchtigengehalt von ca. 5% bis 40% entfernt werden. Dieses Gemisch aus Produkt und Restflüchtigen wird dabei im ersten Extruder durch den Eintrag mechanischer Energie erwärmt. Zusätzlich kann ein leicht flüchtiges Schleppmittel zugegeben werden. Als Schleppmittel kann z.B. Stickstoff, Kohlendioxid oder Wasser bzw. Gemische daraus eingesetzt werden. Das Gemisch aus Produkt, Restflüchtigen und ggf. Schleppmittel wird dann in einen zweiten Extruder gefördert, wobei in dem zweiten Extruder eine weitere Entgasung des Gemischs erfolgt. Einen wesentlichen Anteil an dieser weiteren Entgasung hat eine sogenannte Übergabezone, d.h. die Ausbildung des Übergangs von dem ersten in den zweiten Extruder. Dieser wird insbesondere so ausgebildet, dass es bei dem Eintritt in den zweiten Extruder zu einer Entspannung des Gemischs kommt, die die Entgasung positiv beeinflusst.

Gattungsgemäße Extrudersysteme sind beispielsweise aus US 2009/0 065 965 A1, US 2015/203 600 A1, WO 2013/045 623 A2 und DE 37 03 758 A1 bekannt. Ausgehend von diesem Stand der Technik lag der Erfindung die Aufgabe zugrunde, die Entgasung in einem gattungsgemäßen Extrudersystem weiter zu verbessern.

Diese Aufgabe wird durch ein Extrudersystem gemäß dem unabhängigen Patentanspruch gelöst. Vorteilhafte Ausführungsformen des erfindungsgemäßen Extrudersystems sind Gegenstand der abhängigen Patentansprüche und ergeben sich aus der nachfolgenden Beschreibung der Erfindung.

Ein gattungsgemäßes Extrudersystem zur Entgasung eines Gemisches mit (mindestens) einem ersten Extruder, (mindestens) einem stromab des ersten Extruders angeordneten zweiten Extruder und (mindestens) einer zwischen diesen ausgebildeten Übergabezone, ist erfindungsgemäß durch (mindestens) eine Druckregeleinrichtung gekennzeichnet, durch die der Druck am Austrag des ersten Extruders, d.h. im Eintritt in die Übergabezone regelbar ist.

Durch die Druckregeleinrichtung kann der Energieeintrag und damit die Temperatur des Gemischs eingestellt werden, wobei ein höher eingestellter Druck eine höhere Temperatur des Gemischs bewirken kann und eine höhere Temperatur zu einer verbesserten Entgasung führen kann.

Dabei ist vorzugsweise vorgesehen, dass der Druck nur so hoch eingestellt wird, dass die in dem Gemisch enthaltenen flüchtigen Bestandteile nicht sieden. Gleiches kann für möglicherweise enthaltenes Wasser gelten, dessen Siedetemperatur durch den erhöhten Druck über die herrschenden Temperaturen angehoben werden kann. Ein Sieden des Wassers kann dadurch verhindert werden. Weiterhin kann ein hoher Druck das Dispergieren von begrenzt löslichen Schleppmitteln, wie z.B. Stickstoff oder Kohlendioxid verbessern.

In einer bevorzugten Ausgestaltung des erfindungsgemäßen Extrudersystems kann zudem vorgesehen sein, dass die Druckregeleinrichtung derart angesteuert wird, dass der Druck am Austrag des ersten Extruders größer als in einer sich an die Übergabezone anschließenden Entgasungszone des zweiten Extruders ist. Dadurch wird eine Entspannung des Gemischs, insbesondere beim Eintritt in den zweiten Extruder erreicht. Durch diese Entspannung, insbesondere in Verbindung mit der durch die Druckerhöhung in der Übergabezone bewirkten Temperaturerhöhung, kann der Siededruck des Gemisches unterschritten werden, was zu einer effektiven Entgasung des Gemischs führen kann. Weiterhin kann durch die Entspannung des Gemischs erreicht werden, dass infolge einer Expansion der restlichen flüchtigen Bestandteile und der ggf. vorhandenen Schleppmittel ein Schaum erzeugt wird, der durch eine große Oberfläche die Entgasung begünstigt.

Die Expansion der flüchtigen Bestandteile kann vorzugsweise dadurch unterstützt werden, dass innerhalb des zweiten Extruders (zumindest im Bereich der Entgasungszone) ein möglichst großer Unterdruck bezogen auf den (Über-)Druck in der Übergabezone erzeugt wird. Dabei kann der Druck in der Entgasungszone vorzugsweise auch unterhalb des atmosphärischen Drucks liegen. Besonders bevorzugt kann in der Übergabezone ein Vakuum (insbesondere zwischen 50 mbar und 900 mbar (Absolutdruck)) erzeugt werden.

Da herkömmliche Entgasungsprozesse, insbesondere aus Polymeren, häufig durch die zur Verfügung stehende Oberfläche des Gemisches begrenzt sind, können in einer weiterhin bevorzugten Ausgestaltung des erfindungsgemäßen Extrudersystems Mittel zur Vergrößerung der freien Oberfläche des durch die Übergabezone geführten Gemischs vorgesehen sein. Diese können besonders bevorzugt am Austrag der Übergabezone vorgesehen werden.

Die Mittel zur Vergrößerung der Oberfläche können vorzugsweise eine Lochplatte mit einer Vielzahl von Durchgangsöffnungen aufweisen, durch die das durch die Übergabezone geführte Gemisch in mehrere Teilströme unterteilt wird.

Eine andere Möglichkeit zur Vergrößerung der Oberfläche kann vorsehen, dass das Gemisch in der Übergabezone bzw. beim Eintritt in die Entgasungszone des zweiten Extruders durch eine oder mehrere Schlitzdüsen geführt wird. Diese Schlitzdüsen zeichnen sich durch große Oberfläche-zu-Volumen-Verhältnisse aus, die vorzugsweise dadurch erreicht werden, dass die Düsenöffnungen schlitzförmig mit einer Länge, die ein Vielfaches der Breite beträgt, ausgebildet sind.

Selbstverständlich können auch beide Maßnahme kombiniert werden, d.h. durch eine Lochplatte mit einer Mehrzahl an schlitzförmigen Durchgangsöffnungen (Schlitzdüsen) kann sowohl eine Aufteilung des Gemisches auf mehrere Ströme als auch eine möglichst große Oberfläche für die einzelnen Ströme des Gemisches erreicht werden.

Zur Vermeidung von Produktablagerungen und zur Verbesserung der Abfuhr flüchtiger Bestandteile kann weiterhin vorgesehen sein, dass der zweite Extruder (vorzugsweise senkrecht) oberhalb (bezogen auf die Gravitationsrichtung) des ersten Extruders angeordnet ist. Dadurch kann eine schnelle bzw. direkte Abfuhr des entgasten Gemischs von der Übergabezone und gleichzeitig ein weitgehend frei bleibender Gasraum in der Entgasungszone oberhalb des entgasten Gemischs erreicht werden, durch den die flüchtigen Bestandteile gut abgeführt werden können. Die Abfuhr der flüchtigen Bestandteile kann dabei noch verbessert werden, wenn in der sich an die Übergabezone anschließenden Entgasungszone des zweiten Extruders (mindestens) ein bezogen auf die Gravitationsrichtung (vorzugsweise senkrecht) nach oben führender Entgasungsauslass vorgesehen ist. Das Gemisch und die entgasten Bestandteile können dabei im Gegenstrom, Kreuzstrom und/oder Gleichstrom geführt werden. Durch diese Ausgestaltung des erfindungsgemäßen Extrudersystems können die flüchtigen Bestandteile effektiv von dem entgasten Gemisch getrennt werden; ein Mitreißen von Partikeln des entgasten Gemischs kann durch die besondere Führung des Gemischs und der flüchtigen Bestandteile weitgehend vermieden werden.

In einer anderen Ausführungsform des erfindungsgemäßen Extrudersystems kann eine effektive Trennung des entgasten Gemischs von den flüchtigen Bestandteilen dadurch erreicht werden, dass der zweite Extruder bezogen auf die Gravitationsrichtung (vorzugsweise senkrecht) unterhalb des ersten Extruders angeordnet ist und in einer sich an die Übergabezone anschließenden Entgasungszone des zweiten Extruders (mindestens) eine bezogen auf die Gravitationsrichtung (vorzugsweise horizontal) zur Seite führende Entgasungsöffnung vorgesehen ist.

In dem erfindungsgemäßen Extrudersystems ist im Bereich der Übergabezone (mindestens) ein verschließbarer Auslass für einen Austrag von Gemisch vorgesehen. Diese kann insbesondere dazu dienen, im Rahmen einer Prozesskontrolle einen Teil des Gemischs als Probe zu entnehmen. Auch kann durch den verschließbaren Auslass ein Teil des Gemischs entnommen werden, bevor dieses in den zweiten Extruder überführt wird. Dies kann insbesondere bei einem Anfahren oder Entleeren des ersten Extruders vorteilhaft sein.

Gemäß der Erfindung ist der Auslass mittels der Druckregeleinrichtung verschließbar, wobei die Druckregeleinrichtung hierzu vorzugsweise (mindestens) ein Schieberventil umfassen kann, das durch eine Relativbewegung (Translation oder Rotation) eines Ventilkörpers entweder (mindestens) eine Öffnung der Übergabezone oder den Auslass, durch den ein Teil des Gemischs entnommen werden kann, mehr oder weniger verschließt. Insbesondere kann es sich bei dem Schieberventil um ein (Dreh- )Kolbenventil handeln.

In einer weiterhin bevorzugten Ausgestaltung des erfindungsgemäßen Extrudersystems kann vorgesehen sein, dass eine Extruderschnecke des ersten Extruders mit einer höheren Winkelgeschwindigkeit als eine Extruderschnecke des zweiten Extruders antreibbar ist bzw angetrieben wird. Durch die relativ hohe Rotationsgeschwindigkeit des ersten Extruders kann ein entsprechend hoher Energieeintrag in das Gemisch mit dem Ziel einer Temperaturerhöhung und dadurch einer Entgasung erreicht werden.

Insbesondere bei einer solchen Ausgestaltung des Extrudersystems kann zudem vorgesehen sein, dass der mittlere Volumenquerschnitt des ersten Extruders kleiner als der mittlere Volumenquerschnitt des zweiten Extruders ist. Durch den relativ großen Volumenquerschnitt des zweiten Extruders kann zum einen der mechanische Energieeintrag gering gehalten werden und zum anderen kann ein vergleichsweise großer Gasraum bereitgestellt werden.

Das erfindungsgemäße Extrudersystem eignet sich insbesondere zur Entgasung von Polymeren und insbesondere von Elastomeren.

Die Erfindung wird nachfolgend anhand eines in den Zeichnungen dargestellten Ausführungsbeispiels näher erläutert.

In den Zeichnungen zeigt:
- Fig. 1:: in einer schematischen Seitenansicht eine Ausführungsform eines erfindungsgemäßen Extrudersystems in einer ersten Funktionsstellung; und
- Fig. 2:: einen Teil des Extrudersystems gemäß Fig. 1 in einer zweiten Funktionsstellung;

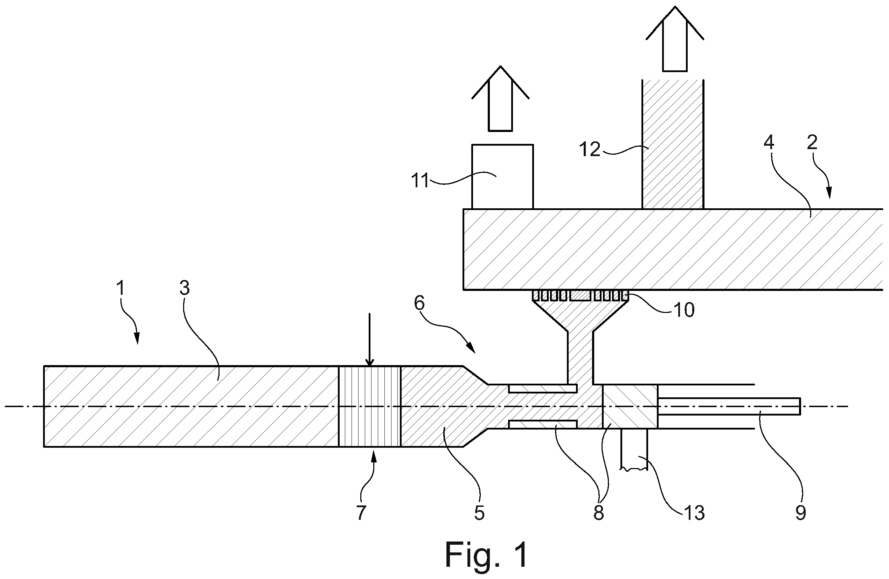

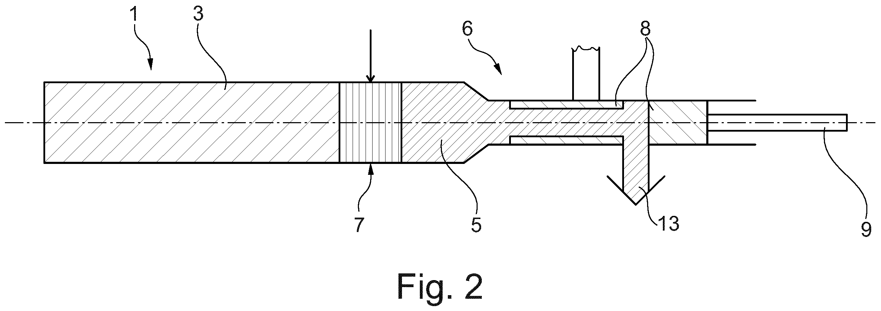

Das in den Fig. 1 und 2 dargestellte Extrudersystem dient der Entgasung von Polymeren und umfasst einen ersten Extruder 1 und einen sich stromab an den ersten Extruder 1 anschließenden zweiten Extruder 2. Die Extruder 1, 2 umfassen jeweils eine oder mehrere Extruderschnecken 3, 4 die, von einem nicht dargestellten Antrieb rotierend angetrieben, in Extrudergehäusen gelagert sind.

In den zwischen den Extruderschnecken 3, 4 und den Extrudergehäusen ausgebildeten ringförmigen Produkträumen wird ein (Produkt-)Gemisch 5 durch die Rotation der mit spiralförmig verlaufenden Gängen ausgebildeten Extruderschnecken 3, 4 transportiert. Dabei findet eine Entgasung statt.

In dem ersten Extruder 1 werden flüchtige Bestandteile, wie insbesondere Lösungsmittel, Restmonomere oder Wasser bis zu einem Restflüchtigengehalt von ca. 5% bis 40% entfernt. Dabei wird das Gemisch 5 aus dem Produkt (dem Polymer) und den flüchtigen Bestandteilen durch den Eintrag mechanischer Energie erwärmt und - in Verbindung mit einer noch zu erläuternden Druckregeleinrichtung in einer Übergabezone 6 zwischen den beiden Extrudern 3, 4 - verdichtet.

In einem sich an das hintere Ende der Extruderschnecke 3 anschließenden Dispergierzone 7 wird dem Gemisch ein leicht flüchtiges Schleppmittel zugesetzt. Hierbei kann es sich z.B. um Stickstoff oder Kohlendioxid handeln.

Das Gemisch 5 strömt dann, bewegt durch die Extruderschnecke 3 des ersten Extruders 1 in die Übergabezone 6. Dabei wird die durch den Extruder 1 bewirkte Druckerhöhung so eingestellt, dass der Druck am Austrag des Extruders 1 mindestens so hoch ist, dass die in dem Gemisch 5 enthaltenen flüchtigen Bestandteile nicht sieden. Bei der Übergabezone 6 handelt es sich um ein Leitungssystem, durch das das Gemisch 5 kontrolliert von dem ersten Extruder 1 in den zweiten Extruder 2 überführt wird. Die Übergabezone 6 umfasst einen ersten Rohrleitungsteil, der sich in längsaxialer Richtung an das hintere Ende des ersten Extruders 1 anschließt, sowie ein zweites Rohrleitungsteil, das sich in einer radialen Richtung des ersten Rohrleitungsteils (bezüglich dessen Längsachse) an dieses anschließt. Die Übergangsöffnung von dem ersten zu dem zweiten Rohrleitungsteil ist mittels einer Druckregeleinrichtung in Form eines Schieberventils mehr oder weniger verschließbar. Hierzu wird ein Ventilkörper 8 mittels eines Kolbens 9 von einer nicht dargestellten Antriebseinrichtung innerhalb des ersten Rohrleitungsteils verschoben.

Das Überströmen des Gemisches von dem ersten Extruder 1 in den zweiten Extruder 2 geht mit einem Druckabfall einher, der zum einen in einer Verringerung des Volumenquerschnitts des ersten Rohrleitungsteils im Vergleich zu dem ersten Extruder 1 und einer ggf. eingestellten Verengung des freien Querschnitts der Übergangsöffnung durch ein teilweises Verdecken mittels des Ventilkörpers 8 begründet ist. Zum anderen ist eine trichterförmige Aufweitung eines Abschnitts des zweiten Rohrleitungsteils vorgesehen.

Am hinteren Ende der trichterförmigen Aufweitung ist eine Lochplatte 10 vorgesehen, die eine Vielzahl von Öffnungen aufweist, durch die das Gemisch 5 hindurchgepresst wird. Dabei wird der Strom des Gemischs 5 in eine Vielzahl von Teilströme unterteilt.

Die Teilströme zeichnen sich durch ein deutlich größeres Oberfläche-zu-Volumen-Verhältnis gegenüber dem vor der Lochplatte 10 herrschenden Gesamtstrom aus. Dieses große Oberfläche-zu-Volumen-Verhältnis beeinflusst wiederum positiv ein Entweichen der flüchtigen Bestandteile aus dem Gemisch 5 und somit dessen Entgasung.

Die Teilströme des Gemischs 5 treten in eine Entgasungszone des zweiten Extruders 2 ein. Dabei schäumt das Gemisch 5 durch eine Expansion der flüchtigen Bestandteile auf, was wiederum zu einer Vergrößerung der Oberfläche und somit zu einer Verbesserung der Entgasung führt. Diese recht schlagartig ablaufende Expansion der flüchtigen Bestandteile wird durch die relativ große Differenz zwischen dem Druck in der Entgasungszone des zweiten Extruders 2 und dem Druck in dem zweiten Rohrleitungsteil der Übergabezone 6 bewirkt. Dazu wird innerhalb des zweiten Extruders 2 die Atmosphäre weitgehend evakuiert.

Der erste Extruder liegt, bezogen auf die Gravitationsrichtung, unterhalb des zweiten Extruders. Das Gemisch 5 wird somit von unten und in einer zu der Extruderschnecke 4 des zweiten Extruders 2 radialen Richtung in den zweiten Extruder 2 eingebracht. Dies führt dazu, dass das Gemisch 5 fast ausschließlich im unteren Abschnitt der Entgasungszone des zweiten Extruders 2 angeordnet ist und von dort unmittelbar mittels der Extruderschnecke 4 abgeführt wird. Im oberen Abschnitt der Entgasungszone verbleibt dadurch ein Gasraum, der weitegehend frei von dem Gemisch 5 ist und über den die flüchtigen Bestandteile gut abgeführt werden können. Das Abführen der flüchtigen Bestandteile erfolgt zum einen über einen Entgasungsauslass 11, der am in Strömungsrichtung des entgasten Gemischs 5 hinteren Ende und dadurch auch hinter dem Bereich vorgesehen ist, in dem das Gemisch 5 in den zweiten Extruder 2 eingebracht wird. Der Entgasungsauslass 11 erstreckt sich in senkrechter, radialer Richtung von dem Gehäuse des zweiten Extruders 2. Durch diese Anordnung des Entgasungsauslasses 11 strömen die flüchtigen Bestandteile in einer zur Hauptströmungsrichtung des Gemischs 5 entgegengesetzten Richtung.

Bei dem dargestellten Extrudersystem ist vorgesehen, im weiteren Verlauf des zweiten Extruders 2 noch eine weitere Entgasung mittels einer sogenannten Stopfschnecke 12 durchzuführen.

Der erste Rohrleitungsteil der Übergabezone umfasst noch einen Auslass 13, über den ein Teil des Gemischs 5 abgeführt werden kann. Dies kann insbesondere zur Entnahme einer Probe im Rahmen einer Prozesskontrolle erfolgen. Im Normalbetrieb des Extrudersystems ist der Auslass 13 von dem Ventilkörper 8 der Druckregeleinrichtung verschlossen. Zur Probenentnahme wird der Ventilkörper 8 soweit verfahren, dass über eine Axial- und eine Querbohrung des Ventilkörpers 8 eine Verbindung zwischen dem Auslass 13 und dem das Gemisch 5 aufnehmenden Teil des ersten Rohrleitungsteils der Übergabezone 6 hergestellt ist. Dabei wird mittels eines Wandabschnitts des Ventilkörpers 8 die Übergangsöffnung von dem ersten zu dem zweiten Rohrleitungsteil der Übergabezone 6 verschlossen (vgl. Fig. 2).

### Bezugszeichenliste

- 1: Extruder
- 2: Extruder
- 3: Extruderschnecke
- 4: Extrudergehäuse
- 5: Gemisch
- 6: Übergabezone
- 7: Dispergierzone
- 8: Ventilkörper
- 9: Kolben
- 10: Lochplatte
- 11: Entgasungsauslass
- 12: Stopfschnecke
- 13: Auslass

## Patentansprüche

1. Extrudersystem zur Entgasung eines Gemischs (5) mit einem ersten Extruder (1), einem stromab des ersten Extruders (1) angeordneten zweiten Extruder (2), einer zwischen diesen ausgebildeten Übergabezone (6) und einer Druckregeleinrichtung, durch die der Druck des Gemischs (5) am Austrag des ersten Extruders (1) regelbar ist, **dadurch gekennzeichnet, dass** im Bereich der Übergabezone (6) ein verschließbarer Auslass (13) für einen Austrag von Gemisch (5) vorgesehen ist, wobei der Auslass (13) mittels der Druckregeleinrichtung verschließbar ist.

2. Extrudersystem gemäß Anspruch 1, **gekennzeichnet durch** eine Lochplatte zur Erhöhung der Oberfläche des durch die Übergabezone (6) geführten Gemischs (5), durch die das durch die Übergabezone (6) geführte Gemisch (5) in mehrere Teilströme unterteilt wird.

3. Extrudersystem gemäß Anspruch 1 oder 2, **dadurch gekennzeichnet, dass** das Gemisch (5) in der Übergabezone durch eine oder mehrere Schlitzdüsen geführt wird.

4. Extrudersystem gemäß einem der vorhergehenden Ansprüche, **dadurch gekennzeichnet, dass** der zweite Extruder (2) oberhalb des ersten Extruders (1) angeordnet ist.

5. Extrudersystem gemäß Anspruch 4, **dadurch gekennzeichnet, dass** in einer sich an die Übergabezone (6) anschließenden Entgasungszone des zweiten Extruders (2) ein nach oben führender Entgasungsauslass (11) vorgesehen ist.

6. Extrudersystem gemäß einem der Ansprüche 1 bis 3, **dadurch gekennzeichnet, dass** der zweite Extruder (2) unterhalb des ersten Extruders (1) angeordnet ist und in einer sich an die Übergabezone anschließenden Entgasungszone des zweiten Extruders (2) ein zur Seite oder nach unten führender Entgasungsauslass vorgesehen ist.

7. Extrudersystem gemäß einem der vorhergehenden Ansprüche, **dadurch gekennzeichnet, dass** die Druckregeleinrichtung ein Schieberventil umfasst.

8. Extrudersystem gemäß Anspruch 7, **dadurch gekennzeichnet, dass** das Schieberventil durch eine Relativbewegung eines Ventilkörpers entweder eine Öffnung der Übergabzone oder den Auslass (13) mehr oder weniger verschließt.

9. Extrudersystem nach einem der Ansprüche 7 oder 8, **dadurch gekennzeichnet, dass** das Schieberventil ein Kolbenventil, insbesondere ein Drehkolbenventil, ist.

10. Extrudersystem nach einem der Ansprüche 7 bis 9, **dadurch gekennzeichnet, dass** die Übergabezone (6) einen ersten Rohrleitungsteil umfasst, der sich in längsaxialer Richtung an ein hinteres Ennde des ersten Extruders (1) anschließt, sowie ein zweites Rohrleitungsteil, das sich in einer radialen Richtung des ersten Rohrleitungsteils an dieses anschließt, wobei eine Übergangsöffnung von dem ersten zu dem zweiten Rohrleitungsteil mittels dem Schieberventil mehr oder weniger verschließbar ist.

11. Extrudersystem gemäß einem der vorhergehenden Ansprüche, **dadurch gekennzeichnet, dass** der Volumenquerschnitt des ersten Extruders (1) kleiner als der Volumenquerschnitt des zweiten Extruders (2) ist.

12. Extrudersystem gemäß einem der vorhergehenden Ansprüche, **dadurch gekennzeichnet, dass** eine Extruderschnecke (3) des ersten Extruders (1) mit einer höheren Winkelgeschwindigkeit als eine Extruderschnecke (4) des zweiten Extruders (2) antreibbar ist.

## Claims

1. Extruder system for degassing a mixture (5) with a first extruder (1), a second extruder (2) arranged downstream of the first extruder (1), a transfer zone (6) formed between them, and a pressure control device by which the pressure of the mixture (5) at the discharge of the first extruder (1) can be regulated, **characterized in that** a closable outlet (13) is provided in the region of the transfer zone (6) for the discharge of mixture (5), wherein the outlet (13) can be closed by means of the pressure control device.

2. Extruder system according to Claim 1, **characterized by** a perforated plate for increasing the surface of the mixture (5) passed through the transfer zone (6), by which the mixture (5) guided through the transfer zone (6) is divided into several partial streams.

3. Extruder system according to Claim 1 or 2, **characterized in that** the mixture (5) is passed through one or more slot nozzles in the transfer zone.

4. Extruder system according to one of the preceding claims, **characterized in that** the second extruder (2) is arranged above the first extruder (1).

5. Extruder system according to Claim 4, **characterized in that** in a degassing zone of the second extruder (2) adjoining the transfer zone (6) there is provided a degassing outlet (11) which leads upwards.

6. Extruder system according to one of Claims 1 to 3, **characterized in that** the second extruder (2) is arranged below the first extruder (1) and a degassing outlet leading to the side or downwards is provided in a degassing zone of the second extruder (2) which adjoins the transfer zone.

7. Extruder system according to one of the preceding claims, **characterized in that** the pressure control device comprises a slide valve.

8. Extruder system according to Claim 7, **characterized in that**, by means of a relative movement of a valve body, the slide valve more or less closes either an opening of the transfer zone or the outlet (13).

9. Extruder system according to either of Claims 7 and 8, **characterized in that** the slide valve is a piston valve, in particular a rotary piston valve.

10. Extruder system according to one of Claims 7 to 9, **characterized in that** the transfer zone (6) comprises a first pipeline part, which adjoins the rear end of the first extruder (1) in the longitudinal axial direction, and a second pipeline part, which adjoins the first pipeline part in a radial direction, wherein a transition opening from the first to the second pipeline part can be more or less closed by means of the slide valve.

11. Extruder system according to one of the preceding claims, **characterized in that** the volume cross section of the first extruder (1) is smaller than the volume cross section of the second extruder (2).

12. Extruder system according to one of the preceding claims, **characterized in that** an extruder screw (3) of the first extruder (1) can be driven at a higher angular velocity than an extruder screw (4) of the second extruder (2).

## Revendications

1. Système d'extrudeuses pour le dégazage d'un mélange (5) avec une première extrudeuse (1), une deuxième extrudeuse (2) agencée en aval de la première extrudeuse (1), une zone de transfert (6) formée entre celles-ci et un dispositif de régulation de pression, par lequel la pression du mélange (5) au niveau de l'évacuation de la première extrudeuse (1) peut être réglée, **caractérisé en ce qu'**une sortie (13) pouvant être fermée est prévue dans la région de la zone de transfert (6) pour une évacuation du mélange (5), la sortie (13) pouvant être fermée au moyen du dispositif de régulation de pression.

2. Système d'extrudeuses selon la revendication 1, **caractérisé par** une plaque perforée pour augmenter la surface du mélange (5) conduit à travers la zone de transfert (6), par laquelle le mélange (5) conduit à travers la zone de transfert (6) est divisé en plusieurs courants partiels.

3. Système d'extrudeuses selon la revendication 1 ou 2, **caractérisé en ce que** le mélange (5) est conduit dans la zone de transfert par une ou plusieurs buses à fente.

4. Système d'extrudeuses selon l'une quelconque des revendications précédentes, **caractérisé en ce que** la deuxième extrudeuse (2) est agencée au-dessus de la première extrudeuse (1).

5. Système d'extrudeuses selon la revendication 4, **caractérisé en ce qu'**une sortie de dégazage (11) conduisant vers le haut est prévue dans une zone de dégazage de la deuxième extrudeuse (2) se raccordant à la zone de transfert (6).

6. Système d'extrudeuses selon l'une quelconque des revendications 1 à 3, **caractérisé en ce que** la deuxième extrudeuse (2) est agencée en dessous de la première extrudeuse (1) et une sortie de dégazage conduisant vers le côté ou vers le bas est prévue dans une zone de dégazage de la deuxième extrudeuse (2) se raccordant à la zone de transfert.

7. Système d'extrudeuses selon l'une quelconque des revendications précédentes, **caractérisé en ce que** le dispositif de régulation de pression comprend une soupape à tiroir.

8. Système d'extrudeuses selon la revendication 7, **caractérisé en ce que** la soupape à tiroir, par un mouvement relatif d'un corps de soupape, ferme plus ou moins soit une ouverture de la zone de transfert, soit la sortie (13).

9. Système d'extrudeuses selon l'une quelconque des revendications 7 ou 8, **caractérisé en ce que** la soupape à tiroir est une soupape à piston, notamment une soupape à piston rotatif.

10. Système d'extrudeuses selon l'une quelconque des revendications 7 à 9, **caractérisé en ce que** la zone de transfert (6) comprend une première partie de canalisation qui se raccorde en direction axiale longitudinale à une extrémité arrière de la première extrudeuse (1), ainsi qu'une deuxième partie de canalisation qui se raccorde dans une direction radiale de la première partie de canalisation à celle-ci, une ouverture de transfert de la première à la deuxième partie de canalisation pouvant être plus ou moins fermée au moyen de la soupape à tiroir.

11. Système d'extrudeuses selon l'une quelconque des revendications précédentes, **caractérisé en ce que** la section transversale volumétrique de la première extrudeuse (1) est inférieure à la section transversale volumétrique de la deuxième extrudeuse (2).

12. Système d'extrudeuses selon l'une quelconque des revendications précédentes, **caractérisé en ce qu'**une vis d'extrudeuse (3) de la première extrudeuse (1) peut être entraînée à une vitesse angulaire plus élevée qu'une vis d'extrudeuse (4) de la deuxième extrudeuse (2).
